# EUROPÄISCHE PATENTANMELDUNG

(11) **EP 0 898 193 A1**
(43) Veröffentlichungstag der Anmeldung: **24.02.1999**
(21) Anmeldenummer: 97114137.9
(22) Anmeldetag: 16.08.1997
(51) Int. Cl.: G02B 27/22

(54) **Vorrichtung zum Betrachten von Stereo-Bildern**

(71) Anmelder: Baumgartner, Walter, 8400 Winterthur (CH)
(72) Erfinder: Baumgartner, Walter, 8400 Winterthur (CH)

(57) **Zusammenfassung**

Die Erfindung handelt von einer Vorrichtung zum Betrachten von Stereobildern (7), deren Halbbilder (3),(4) nebeneinander angeordnet sind. Dier Strahlengang ist in einer optischen Vorrichtung so zusammengefaßt, daß jedem Auge (1),(2) eine Lupe (11),(12) und ein daran anschließendes Prisma (9),(10) zugeordnet ist. Die Prismen (9),(10) lenken parallel zur Gesichtsmittelebene (21) einfallende Strahlen von dieser nach außen weg. Durch die Kombination mit einer Vergrösserungsoptik (11),(12) entstehen für den Betrachter vergrößerte Stereobilder, deren Bildpunkte zwischen den Halbbildern einem wesentlich größeren Abstand (b) als dem Augenabstand (a) des Betrachters entsprechen und einen größeren Bildwinkel mit mehr Raumgefühl vermitteln.

## Beschreibung

Die Erfindung handelt von einer Vorrichtung zum Betrachten von Stereobildern, deren Halbbilder nebeneinander angeordnet sind, wobei die Vorrichtung im Strahlengang vor jedem Auge eine Vergrösserungsoptik aufweist.

Der Mensch nimmt die Umgebung optisch dreidimensional wahr, indem im Gehirn die vom linken und rechten Auge aufgenommenen zweidimensionalen Bilder der betrachteten Gegenstände zu einer 3-D-Wahrnehmung verarbeitet werden. Bei der Stereo-Fotografie wird der darzustellende Gegenstand von mindestens zwei in einem vom Vorder- und Hintergrund abhängigen Abstand angeordneten Kameras aufgenommen. Solch aufgenomme stereoskopische Bildpaare werden den Augen derart vorgeführt, daß jedes Auge des Betrachters jeweils nur das von der entsprechenden Kamera aufgenommene Bild sieht. Um diese zur Betrachtung notwendige Bildtrennung zu erreichen, sind verschiedene Lösungen vorgeschlagen worden :

Eine weit verbreitete Lösung besteht in Betrachtungsgeräten, bei denen zwei im Augenabstand angeordnete Stereo-Bilder jeweils durch eine Lupe betrachtet werden.

Beim Anaglyphenverfahren werden die für das linke und rechte Auge bestimmten Bilder rot resp. grün aufeinander gedruckt oder projiziert und den Augen über eine Rot-Grün filternde Brille vermittelt. Dieses Verfahren ergibt einen nicht naturgetreuen Farbeindruck und ist deshalb für Bilder, bei denen der Farbe eine wichtige Bedeutung zukommt nicht geeignet.

Beim Polarisationsverfahren werden die Bilder für das linke und rechte Auge von zwei Projektoren unterschiedlich polarisiert auf eine reflektierende Projektionswand projiziert. Diese Bilder werden wiederum von den Augen über eine Brille mit entsprechend polarisierten Gläsern aufgenommen. Dieses Verfahren ist für gedruckte Medien und das Fernsehen nicht geeignet.

Beim NESH-Verfahren (siehe Stereo-Journal , Juli 1982, Heft 25 , Seite 15 - 19 ) werden die Stereo-Bilder untereinander angeordnet. Die Augen werden über eine Brille mit Prismen vertikal zum Schielen gebracht. Im entsprechenden und einzig möglichen Abstand sieht der Betrachter drei Bilder, von denen das mittlere plastisch wirkt. Diese Verfahren ist extrem entfernungsabhängig , weil die Augen vertikal keine Korrekturmöglichkeiten haben.

Das KMQ-Verfahren (siehe Druckschrift der KMQ - Stereographie GBR, Bischoffstr. 15, Stuttgart 80 : 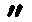 Das vollständig kompatible KMQ-Stereosystem ", 18 Seiten) entspricht dem NESH-Verfahren, jedoch sind auf den Prismen mattierte Streifen auf ihrer dünnen Seite angebracht. Auf diese Weise werden die unerwünschten Bilder ( Geisterbilder ) unterdrückt.

In der Offenlegungsschrift DE 3407649 A1 werden Prismen vorgeschlagen, die zur Betrachtung von nebeneinander liegenden Stereo-Bildern dienen. Werden jedoch größere Stereo-Bilder betrachtet, müssen die Bilder entsprechend weiter weg gehalten werden, damit sie zur Deckung gebracht werden können. Der Blickwinkel und damit der subjektive Eindruck der Bildgrösse wird dadurch wieder kleiner.

Aufgabe der vorliegenden Erfindung ist es, eine einfache Vorrichtung zu bilden, die das Betrachten von Stereobildern unter einem großen Blickwinkel ermöglicht.

Diese Aufgabe wird mit dem Kennzeichen vom unabhängigen Anspruch 1 gelöst. Die Vorrichtung hat den Vorteil, daß sie für Stereobilder verwendbar ist, bei denen der Abstand der entsprechenden Bildpunkte größer als der Augenabstand ist und daß ein großes Stereobild erzeugt wird.
Als weitere Vorteile sind anzusehen, daß sie für Farbbilder verwendbar ist und der Abstand zu den Bildern in gewissem Bereich variabel ist, sowie daß sie einfach und billig herzustellen ist.
Vorteilhafte Weiterbildungen der Erfindung sind in den abhängigen Ansprüchen 2 bis 10 aufgeführt. Der Wert der Erfindung wird darin gesehen, daß sie ein größeres Raumgefühl vermittelt. Dies ist nicht nur für die Bilder interessant, die mit einer Stereokamera aufgenommen wurden, sondern auch für künstlich geschaffene Computerbilder. Die Computergrafik ist heute so entwickelt, daß es ohne weiteres möglich ist, einen Gegenstand auf einem Bildschirm oder im Ausdruck perspektivisch darzustellen, wobei der Beobachter wie im Vogelflug verschiedene Standorte einnehmen kann. Solche Stereo-Bilder sind relativ einfach herzustellen, wenn der Gegenstand datenmässig erfasst ist. Architekten, Designer und die Hersteller von Katalogen können mit dieser Technik einem großen Publikum Raumformen mit einem großen Blickwinkel vermitteln, da die Erfindung einfach und billig herzustellen ist. Ein solches optisches System läßt sich beispielsweise in Acrylglas pressen und mit einem Brillenglas verbinden oder auf eine vorhandene Brille aufsetzen.

Ein Ausführungsbeispiel der Erfindung ist anhand mehrerer Figuren dargestellt. Es zeigen
Fig. 1 schematisch die geometrisch optischen Verhältnisse bei der Anwendung der Erfindung auf ein optisches System;
Fig. 2 schematisch ein Ausführungsbeispiel der Erfindung bei dem das optische System mit einem Brillengestell kombiniert ist.

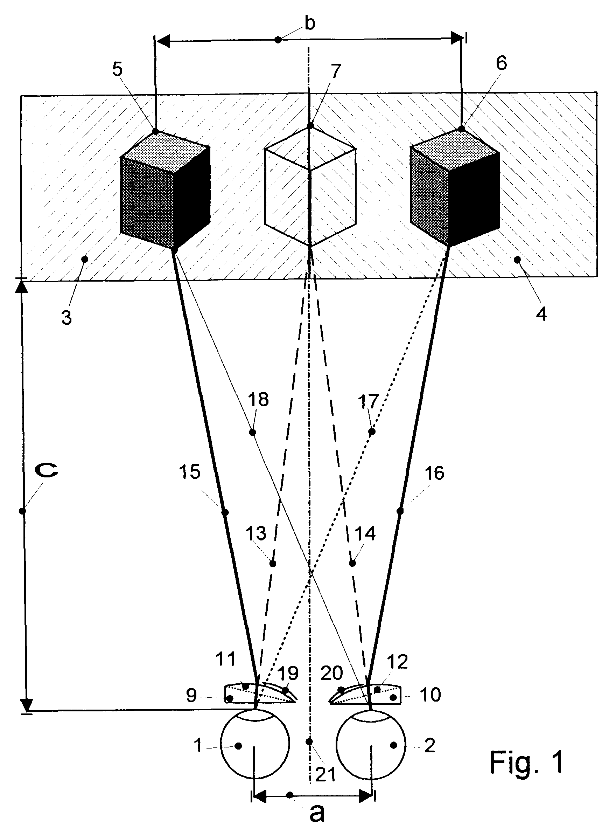

In Fig. 1 wird der geometrisch optische Strahlenverlauf dargestellt, wie er beispielsweise bei der Betrachtung von Stereo-Bildern [3], [4] vorliegt, bei denen der Abstand [b] von entsprechenden Punkten [5], [6] größer als der Augenabstand [a] ist. Das linke und rechte Auge [1], [2] betrachten durch ein optisches System jeweils ein Stereobild [3],[4]. Das optische System besteht aus beispielsweise zur Nase hin sich verjüngenden Prismen [9], [10] und jeweils einer Lupe [11], [12]. Die solchermaßen aufgebaute Optik erfüllt zwei Zwecke : Die Sehstrahlen [13],[14] auf einen sich entsprechenden Punkt der Stereobilder werden solchermaßen abgelenkt, daß das Auge in Richtung der Strahlen [13], [14] zu sehen glaubt. In Wirklichkeit aber verlaufen die Sehstrahlen [15], [16] in Richtung zu den entsprechenden Bildpunkten. Die Stereo-Halbbilder eines Objekts [5],[6] verschmelzen dadurch zum Stereobild des Objekts [7].
Durch die Lupen [11], [12] erscheint das Bild vergrößert und das Blickfeld mit Stereoeffekt wird größer. Dank dieser Kombination von Prisma und Lupe können auch grossformatige Stereobilder betrachtet werden, ohne daß entweder der Abstand [c] zu den Bildern vergrößert werden muß und die Bilder dadurch wieder kleiner erscheinen oder sehr starke Prismen verwendet werden müssen und damit Verzerrungen oder Dispersion störend auftreten können. Der zur Nase hin zeigende Teil des optischen Systems ist mit jeweils einer Blende [19], [20] versehen, die verhindern soll, daß das jeweilige Auge das Bild, welches für das andere Auge bestimmt ist ( Geisterbild ) , deutlich sieht. Dies wird erreicht, indem die Mehrheit der unerwünschten Sehstrahlen [17], [18] beispielsweise durch eine mattierte Oberfläche der Optik abgeblendet wird.

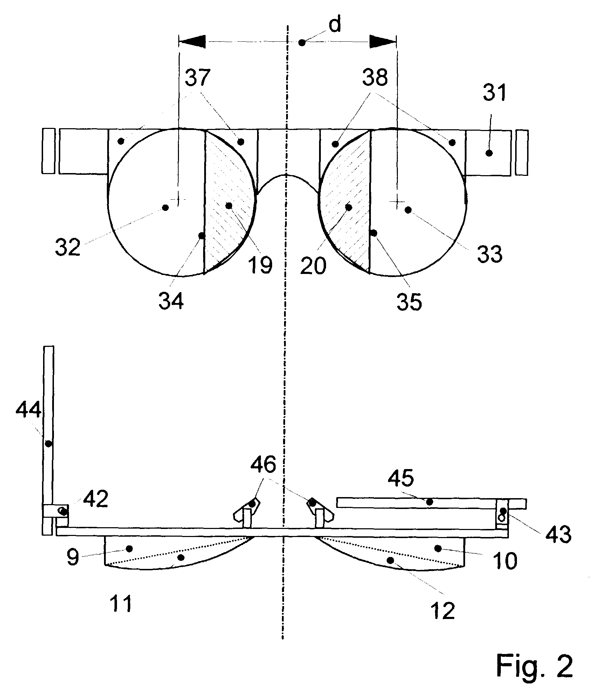

In Fig. 2 sind mit einer Strebe [31] über jeweils ein Gelenk [42], [43] zwei nur schematisch angedeutete Bügel [44], [45] angeordnet. In der Mitte der Strebe [31] befindet sich eine Vorrichtung [46] zur Abstützung der Betrachtungsvorrichtung auf der Nase. Links und rechts davon ist jeweils eine Halterung (Fassung) [37], [38] für die Bildung des optischen Systems vorgesehen. Das optische System legt die Lage der optischen Achsen [32], [33] fest und enthält wenigstens für jedes Auge ein Prisma [9],[10] und eine Lupe [11], [12]. Die Blenden [19] , [20] sind beispielsweise so ausgebildet, daß sie eine mattierte Oberfläche bilden, die durch eine Vertikale [34], [35] zur Nase hin liegende Teile vom bildgebenden optischen Teilgebiet abgrenzen.

## Patentansprüche

1. Vorrichtung zum Betrachten von Stereobildern [7], deren Halbbilder [3],[4] nebeneinander angeordnet sind, wobei die Vorrichtung im Strahlengang vor jedem Auge [1],[2] eine Vergrösserungsoptik [11],[12] aufweist, dadurch gekennzeichnet, daß im Strahlengang jeweils ein Prisma [9],[10] an die Vergösserungsoptik [11],[12] anschließt, welches parallel zur Gesichtsmittelebene [21] einfallende Strahlen von dieser weg nach außen ablenkt, um einem Betrachter vergrößerte Stereobilder zu vermitteln, deren Bildpunkte zwischen den Halbbildern [3],[4] einem größeren Abstand [b] als dem Augenabstand [a] des Betrachters entsprechen.

2. Vorrichtung nach Anspruch 1 dadurch gekennzeichnet, daß jedem Auge ein optisches System aus einer Lupe [11],[12] und einem Prima [9],[10] zugeordnet ist.

3. Vorrichtung nach Anspruch 1, dadurch gekennzeichnet, daß Prisma [9],[10] und / oder Vergrösserungsoptik als optisches System durch Fresnellinsen gebildet sind.

4. Vorrichtung nach einem der Ansprüche 1 bis 3, dadurch gekennzeichnet, dass das Prisma [9],[10] eine Stärke von 10 cm/m bis 80 cm/m Prismendioptrien und die Vergrösserungsoptik eine Stärke von +2 bis +6 Dioptrien aufweist.

5. Vorrichtung nach einem der Ansprüche 2 oder 3 dadurch gekennzeichnet, daß das optische System eine Vorrichtung zur Unterdrückung von Geisterbildern enthält.

6. Vorrichtung nach Anspruch 5, dadurch gekennzeichnet, daß für jedes Auge [1],[2] am optischen System eine Blende[19],[20] zur Gesichtsmittelebene [21] hin vorgesehen ist, die einen Großteil des Sehfeldes abdeckt, welches für das andere Auge freigegeben ist.

7. Vorrichtung nach Anspruch 2 oder 3 , dadurch gekennzeichnet, daß das optische System am Austritt zum Auge hin optische Achsen [32],[33] mit einen Abstand von 50 mm bis 70 mm aufweist.

8. Vorrichtung nach einem der Ansprüche 1 bis 7 , dadurch gekennzeichnet, daß Vergrösserungsoptik [11], [12] und Prisma [9], [10] jeweils auf eine vorgegebene Halbbildgrösse optimiert sind , beispielsweise einem liegenden oder stehenden internationalen Postkartenformat von 100 x 150 mm entspricht.

9. Vorrichtung nach einem der Ansprüche 1 bis 8 , dadurch gekennzeichnet, daß sie ein Brillengestell aufweist, um das optische System in einer zu den Augen vorgegebene Position am Kopf des Betrachters zu befestigen.

10. Vorrichtung nach einem der Ansprüche 1 bis 8 , dadurch gekennzeichnet, daß sie als Aufsatz auf einer Brille befestigbar ist.
